# EUROPÄISCHE PATENTSCHRIFT

(11) **EP 1 391 649 B1**
(45) Veröffentlichungstag und Bekanntmachung des Hinweises auf die Patenterteilung: **16.03.2005**
(21) Anmeldenummer: 03017782.8
(22) Anmeldetag: 04.08.2003
(51) Int. Cl.: F16L 37/091, F16L 37/092, F16L 19/04

(54) **Steckfitting**
Plug-in connector for a pipe
Raccord mâle et femelle pour des tubes

(30) Priorität: 22.08.2002 DE 10238549
(43) Veröffentlichungstag der Anmeldung: 25.02.2004
(73) Patentinhaber: Poloplast GmbH, 87640 Ebenhofen (DE)
(72) Erfinder: Birke, Karl, 87640 Bissenhofen (DE); Böck, Armin, 87640 Bissenhofen (DE); Schleich, Andreas, 82380 Peissenberg (DE); Schwarz, Heimo, 4050 Traun (AT)
(74) Vertreter: Schaeberle, Steffen

(56) Entgegenhaltungen:
- EP-A- 0 596 394
- EP-A- 0 655 577
- EP-A- 0 667 481
- DE-A- 19 854 854
- US-A- 5 348 354

## Beschreibung

Die Erfindung bezieht sich auf einen Steckfitting gemäß den Merkmalen des Oberbegriffs des Hauptanspruchs.

Im Einzelnen bezieht sich die Erfindung auf einen Steckfitting oder Rohrverbinder mit einem mit einer Durchgangsausnehmung versehenen Grundkörper, mit einer Einsteckausnehmung für einen Endbereich eines Rohrs sowie mit Haltemitteln für das Rohr.

Der Stand der Technik zeigt unterschiedlichste Ausgestaltungen derartiger Rohrverbinder oder Steckfittinge.

Abgesehen von Konstruktionen, bei welchen die Rohrenden mit den Rohrverbindern verschweißt werden, sind Konstruktionen bekannt, die eine Verklemmung oder Quetschung vorsehen. Hierzu sind, ebenso wie bei dem Schweißen, spezielle Werkzeuge erforderlich. Weiterhin bedarf es entsprechender handwerklicher Kenntnisse, um diese Vorgänge durchzuführen.

Bei Steckfittingen, so wie diese aus dem Stand der Technik bekannt sind, ist es möglich, das Rohrende einzuschieben, um es entsprechend zu verrasten. Hierzu sind metallische Sperrklinken oder Ähnliches vorgesehen, die zum einen beim Einschieben des Rohrs verformt werden und sich zum anderen beim Aufbau eines Innendrucks in die Außenwandung des Rohrs eindrücken.

Als nachteilig erweist sich bei diesen Konstruktionen, dass es nicht möglich ist, das Rohr nachträglich von dem Steckfitting oder Rohrverbinder wieder zu lösen. Ist eine Fehl-Installation vorgenommen worden, so ist es erforderlich, den Steckfitting mitsamt dem Rohrende zu entfernen. Der Steckfitting ist nicht mehr verwendbar. Durch das Kürzen des Rohres entstehen weitere Probleme bei der Installationsarbeit.

Der Stand der Technik zeigt auch einzelne Konstruktionen, bei welchen ein nachträgliches Lösen des Rohres möglich ist.

Derartige Steckfittinge können bei Druckleitungen unterschiedlichster Art, beispielsweise im Heizungsbau oder bei der Wasserversorgung, eingesetzt werden. Die Rohre können in Form einfacher Kunststoffrohre ausgebildet sein, es ist jedoch auch möglich, ummantelte Rohre zu verwenden.

Die DE 198 54 854 A1 beschreibt eine Anschlussvorrichtung mit einer Steckhülse, bei welcher ein Rohr auf einen Grundkörper aufschiebbar ist. Der Rohrträger des Grundkörpers ist von einer Hülse umgeben, in deren Innenraum ein Klemmring mit Segmenten angeordnet ist, die in die Aussenfläche des Rohrs einpressbar sind.

Aus der gattungsbildenden US 5 348 354 A ist ein Steckfitting vorbekannt, bei welchem ein zylindrischer Rückhaltering verwendet wird, bei welchem einzelne Zinken eines metallischen Ringes vorstehen, die sich in die Oberfläche des Rohres verkrallen.

Eine weitere Steckfitting-Konstruktion zeigt die EP 0 655 577 A. Hierbei wird ein geteilter Verriegelungs-Ring verwendet, der aus einem Federmaterial besteht. Am Umfang des Rings ist eine Messerkante ausgebildet, die durch Einschnitte so unterteilt ist, dass sich eine zackenförmige Konstruktion ergibt.

Der Erfindung liegt die Aufgabe zugrunde, einen Steckfitting der eingangs genannten Art zu schaffen, welcher bei einfachem Aufbau und einfacher Anwendung kostengünstig herstellbar ist und ein hohes Maß an Betriebssicherheit aufweist.

Erfindungsgemäß wird diese Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass an dem Grundkörper ein die Einsteckausnehmung bildender Freiraum vorgesehen ist, welcher von einer an dem Grundkörper befestigten Rasthülse umgeben ist und dass in dem Freiraum zumindest ein ringförmiger, mit Krallen versehener Rastring angeordnet ist.

Der erfindungsgemäße Steckfitting zeichnet sich durch eine Reihe erheblicher Vorteile aus.

Erfindungsgemäß kann an dem Grundkörper ein Rohrstutzen ausgebildet sein (für mehrschichtige Rohre), es ist auch möglich, den Steckfitting ohne Rohrstutzen zu verwenden. Im ersteren Falle erfolgt eine Abdichtung zwischen dem Rohrstutzen und dem Rohr, während im zweiteren Falle eine Abdichtung zwischen dem Rohr und der Rasthülse bzw. dem Grundkörper erfolgt.

Durch den beschriebenen Aufbau mit einem Rohrstutzen und einer Rasthülse ist es möglich, unterschiedlichste Rohrkonstruktionen zu verwenden, insbesondere auch ummantelte Rohre. An dem Rohrstutzen sind üblicherweise Dichtmittel (O-Ringe) vorgesehen, die zusammen mit der Innenwand des Rohres zu einer sicheren Abdichtung führen.

Durch die Verwendung des erfindungsgemäß vorgesehenen Rastringes ist es möglich, eine besonders kostengünstig und einfach herzustellende Verrastung mit einem kurzen Wirk- oder Rastweg vorzusehen. Der Rastring weist bevorzugterweise einen mit einem Kreisquerschnitt versehenen Ringkörper auf, an welchem, zum Innenraum des Ringkörpers weisend, die Krallen angeordnet sind. Beim Einschieben des Rohres wird somit der Rastring um seine ringförmige Mittelachse gedreht, sodass die Krallen verschwenkt werden können. Der Rastring wird somit in gewissem Maße umgestülpt. Durch diese Konstruktion ist es möglich, den Rastring aus Kunststoff zu fertigen. Durch die Umstülpung oder Verformung um die ringförmige Mittelachse wird verhindert, dass die einzelnen Krallen brechen können. Die Krallen selbst werden somit nicht relativ zu dem Ringkörper verformt oder bewegt, vielmehr wird der gesamte Ringkörper in sich gedreht. Beim Einschieben des Rohrs erfolgt somit ein Abstreifen oder Entlangstreifen an dem Rastring bzw. an dessen Krallen.

Besonders günstig ist es, wenn zwei mittels einer Distanzhülse voneinander beabstandete Rastringe vorgesehen sind. Die Distanzhülse ist somit ebenfalls in dem Freiraum angeordnet und fixiert die beiden Rastringe in einem vorgegebenen Abstand innerhalb der Rasthülse. Hierdurch wird ein sicheres Halten und Verankern des Rohrendes gewährleistet.

Um den Steckfitting nach seiner Montage auf einfache Weise von dem Rohrende demontieren zu können, ist es besonders günstig, wenn radial innerhalb der Distanzhülse eine mit den Krallen der Rastringe in Kontakt befindliche Schiebehülse angeordnet ist. Mittels eines geeigneten Werkzeuges ist es somit möglich, den äußeren Rastring in sich zu verdrehen. Hierdurch wird die Schiebehülse verschoben und führt zu einer entsprechenden Verdrehung des anderen Rastrings. Somit können beide Rastringe in ihre Entriegelungsstellung gebracht werden, um das Rohrende abzuziehen. Die Rastringe werden dabei ebensowenig beschädigt wie die an diesen vorgesehenen Krallen.

Zur Sichtkontrolle, ob das Rohrende vollständig eingeschoben ist, ist es vorteilhaft, wenn die Rasthülse im Bereich des Freiraums mit zumindest einem Sichtfenster versehen ist. Hierdurch kann optisch das Rohrende erblickt werden, um sicherzustellen, dass dieses vollständig in den Steckfitting eingeschoben wurde.

Eine akustische Kontrolle kann durch eine ringförmige Klick-Scheibe erfolgen, die am vorderen Endbereich des Freiraums angeordnet ist. Beim Anpressen des Rohrendes beim Einschieben desselben in den Steckfitting ergibt sich ein deutliches Klick-Geräusch.

Der erfindungsgemäße Steckfitting ist hinsichtlich seiner Konstruktion so ausgebildet, dass sämtliche Teile bevorzugterweise aus Kunststoff gefertigt werden können. Dies erniedrigt zum einen die Herstellungskosten ganz erheblich. Zum anderen kann jede Art von Korrosionsproblemen vermieden werden.

Im Folgenden wird die Erfindung anhand von Ausführungsbeispielen in Verbindung mit der Zeichnung beschrieben. Dabei zeigt:
- Fig. 1: eine Längs-Schnittansicht eines erfindungsgemäßen Steckfittings mit einem montierten Rohrende,
- Fig. 2: x eine Seitenansicht, nicht im Schnitt, eines erfindungsgemäßen Steckfittings mit zwei montierten Rohrenden,
- Fig. 3: eine Seitenansicht, analog den Fig. 1 und 2, eines Steckfittings mit entfernten Rasthülsen,
- Fig. 4: eine Seitenansicht einer Rasthülse,
- Fig. 5: eine perspektivische Teil-Schnittansicht der Anordnung analog Fig. 1,
- Fig. 6: eine perspektivische Teil-Schnittansicht mit Rasthülse, Rastringen, Distanzhülse und Schiebehülse,
- Fig. 7: eine Ansicht, ähnlich Fig. 6,
- Fig. 8: eine perspektivische Darstellung eines Rastrings,
- Fig. 9: eine andere perspektivische Darstellung des in Fig. 8 gezeigten Rastrings,
- Fig. 10: eine Draufsicht auf den in den vorangegangenen Figuren gezeigten Rastring,
- Fig. 11: eine Schnittansicht längs der Linie XI-XI von Fig. 10,
- Fig. 12: eine vereinfachte Teil-Seitenansicht unter Darstellung des Vorgangs des Einschiebens des Rohres in einen Rastring,
- Fig. 13: eine Darstellung, analog Fig. 12, mit verrastetem Rastring,
- Fig. 14: eine perspektivische Darstellung eines Ausführungsbeispiels eines Werkzeugs zum Lösen des Steckfittings von einem Rohrende,
- Fig. 15: eine Ansicht, analog Fig. 7, mit jedoch nur einem Rastring,
- Fig. 16: eine Schnittansicht eines weiteren Ausführungsbeispiels ohne Rohrstutzen 5 und mit nur einem Rastring,
- Fig. 17: ein Ausgestaltungsbeispiel, analog Fig. 16, jedoch mit zwei Rastringen,
- Fig. 18: eine Schnittansicht eines Ausführungsbeispiels mit Verschlusskappe,
- Fig. 19: eine perspektivische Ansicht des in Fig. 18 gezeigten Ausführungsbeispiels,
- Fig. 20: eine perspektivische Ansicht eines weiteren Ausführungsbeispiels mit Verschlussfolie,
- Fig. 21: eine Darstellung der Klickscheibe im Ausgangszustand, und
- Fig. 22: eine Darstellung der Klickscheibe im verformten Zustand.

In den Zeichnungen sind gleiche Teile jeweils mit gleichen Bezugsziffern versehen.

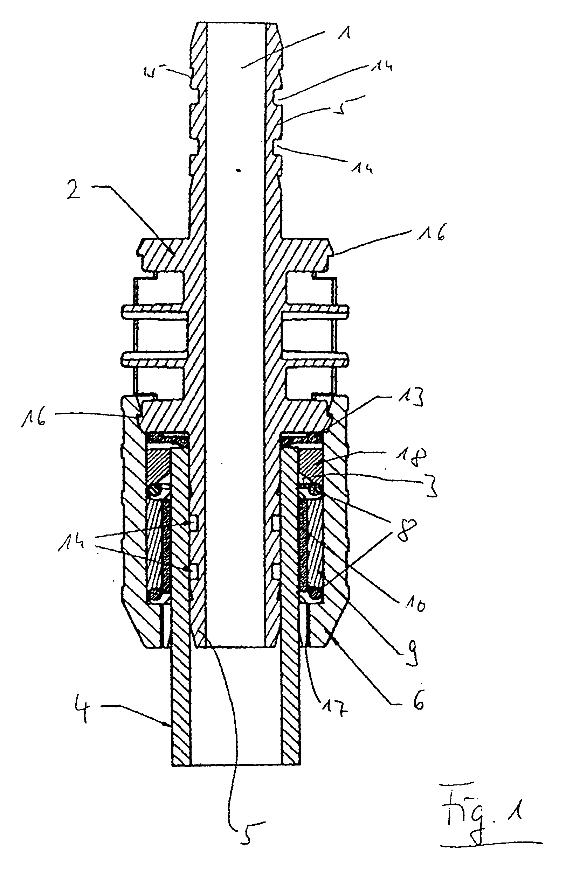

Die Fig. 1 zeigt eine Längs-Schnittansicht eines erfindungsgemäßen Steckfittings. Dieser weist einen Grundkörper 2 auf, an welchem einstückig beidseitig jeweils Rohrstutzen 5 ausgebildet sind. Sowohl die Rohrstutzen 5 als auch der Grundkörper 2 weisen eine Durchgangsausnehmung 1 auf. An dem Rohrstutzen 5 sind zwei Ringnuten 14 ausgebildet, in welche nicht dargestellte O-Ringe einlegbar sind.

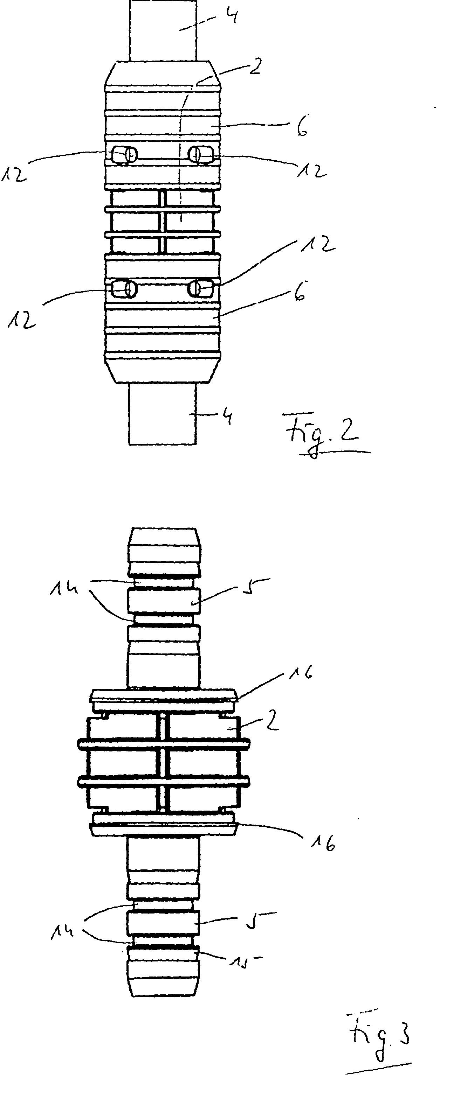

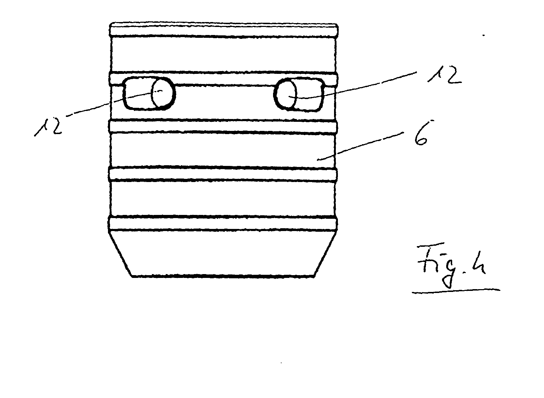

Die Rohrstutzen 5 können weiterhin mit Krallringen 15 (Fig. 3) versehen sein, welche eine zusätzliche Verankerung der Innenwandung eines Rohrs 4 ermöglichen.

Wie aus der Fig. 1 ersichtlich, ist auf die beiden Endbereiche des Grundkörpers 2 jeweils eine Rasthülse 6 aufsteckbar, welche mittels Rastmitteln 16 gehalten wird.

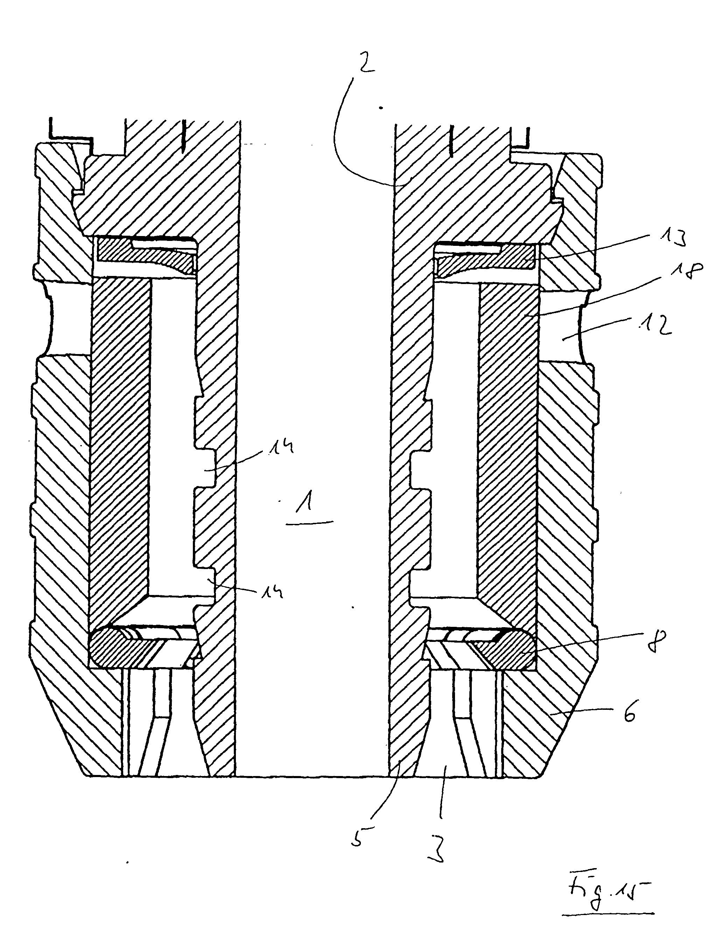

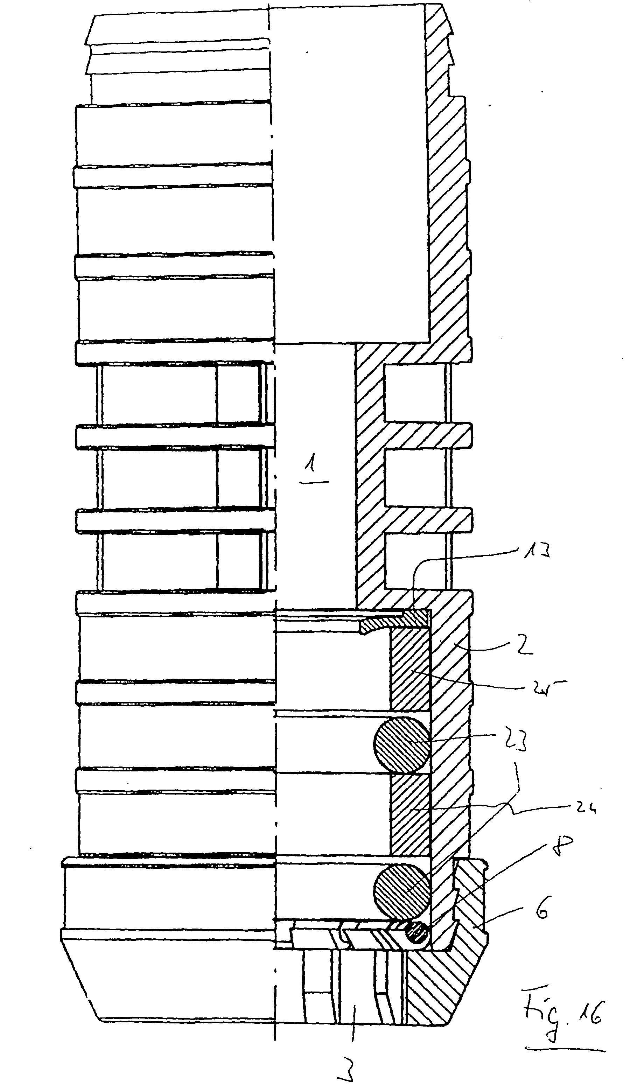

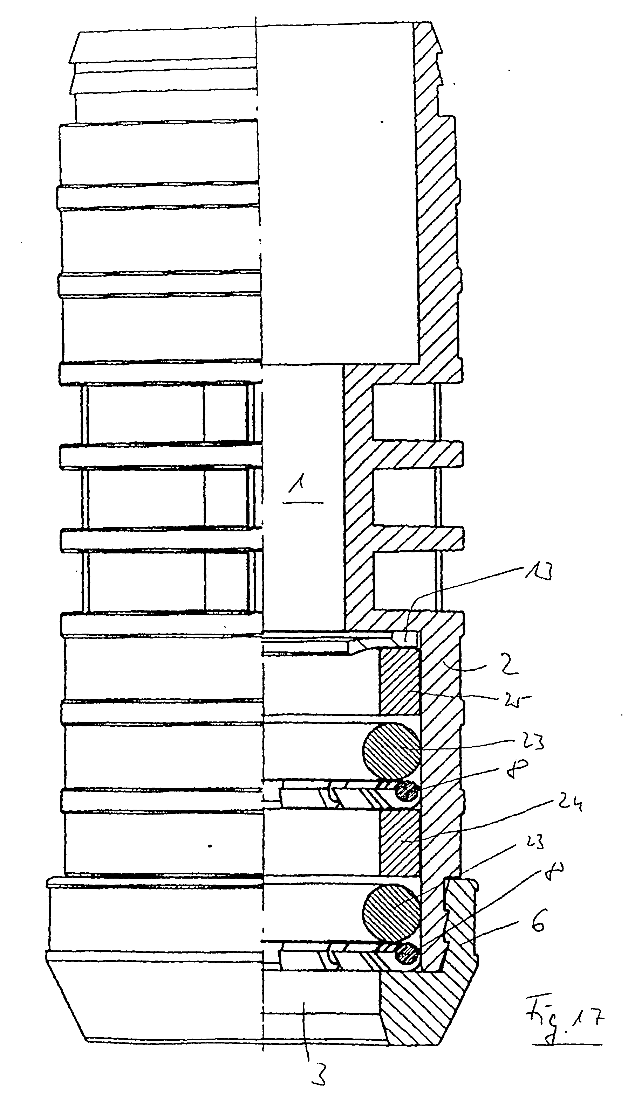

Die Rasthülse 6 weist einen Innendurchmesser auf, welcher mit dem Außendurchmesser des Rohrs 4 eine Einsteckausnehmung 3 bildet. Das freie Ende des Rohrs 4 ist somit in diese Einsteckausnehmung 3 einschiebbar. Das freie Ende der Rasthülse 6 ist mit einer Ausnehmung 17 versehen, welche so bemessen ist, dass ein in Zusammenhang mit Fig. 14 noch zu beschreibendes Werkzeug 11 einschiebbar ist.

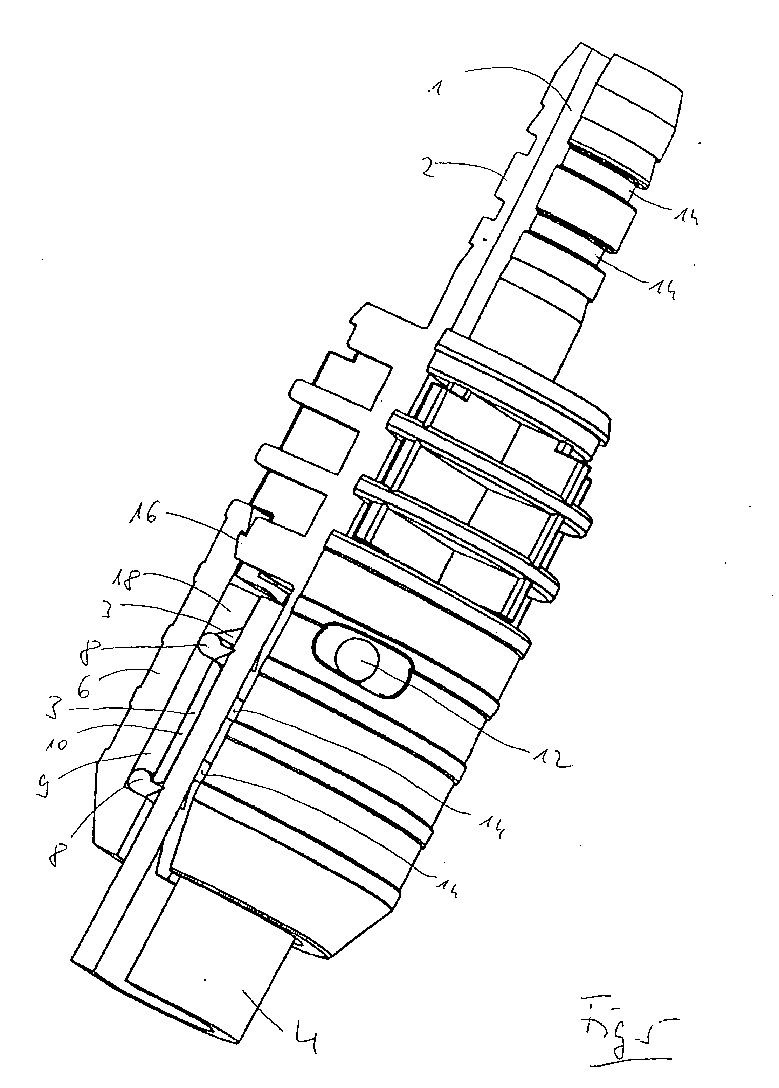

Die Rasthülse 6 ist mit mehreren Sichtfenstern 12 versehen (siehe beispielsweise Fig. 2 und 4). Durch die Sichtfenster 12 ist eine optische Kontrolle der korrekten Montage des Rohrs 4 möglich). Mittels eines transparenten Fensterrings wird ein Eindringen von Staub oder sonstigen Verschmutzungen verhindert.

Erfindungsgemäß ist es auch möglich, die Rasthülse vollständig aus einem transparenten Material zu fertigen. Diese Ausgestaltung gibt die Möglichkeit, die korrekte Montage zu überwachen. Es versteht sich, dass die Rasthülse auch in Teilbereichen transparent sein kann, beispielsweise mit opaken Ringbereichen oder Ähnlichem. Die Rasthülse kann aus einem farblosen transparenten Material oder aus einem farbigen transparenten Material gefertigt sein. Erfindungsgemäß ist es auch möglich, beispielsweise eine nachfolgend zu beschreibende Klickscheibe und/oder eine Distanzhülse oder weitere Bauelemente transparent auszubilden, um auf diese Weise die funktionsfähige Montage überwachen zu können. Hieraus ergibt sich eine ganz erhebliche Steigerung der Funktionssicherheit des erfindungsgemäßen Steckfittings.

Am stirnseitigen Endbereich des Freiraums 3 ist im montierten Zustand eine kreisringförmige Klick-Scheibe angeordnet. Diese wird beim Einschieben des Rohres 4 verformt und verursacht ein Klick-Geräusch.

Erfindungsgemäß ist es auch möglich, die Klickscheibe einstükkig mit den Fensterring auszubilden. Hierdurch minimieren sich die Herstellungskosten. Wie bereits erwähnt, kann auch diese Kombination zwischen Fensterring und Klickscheibe transparent sein.

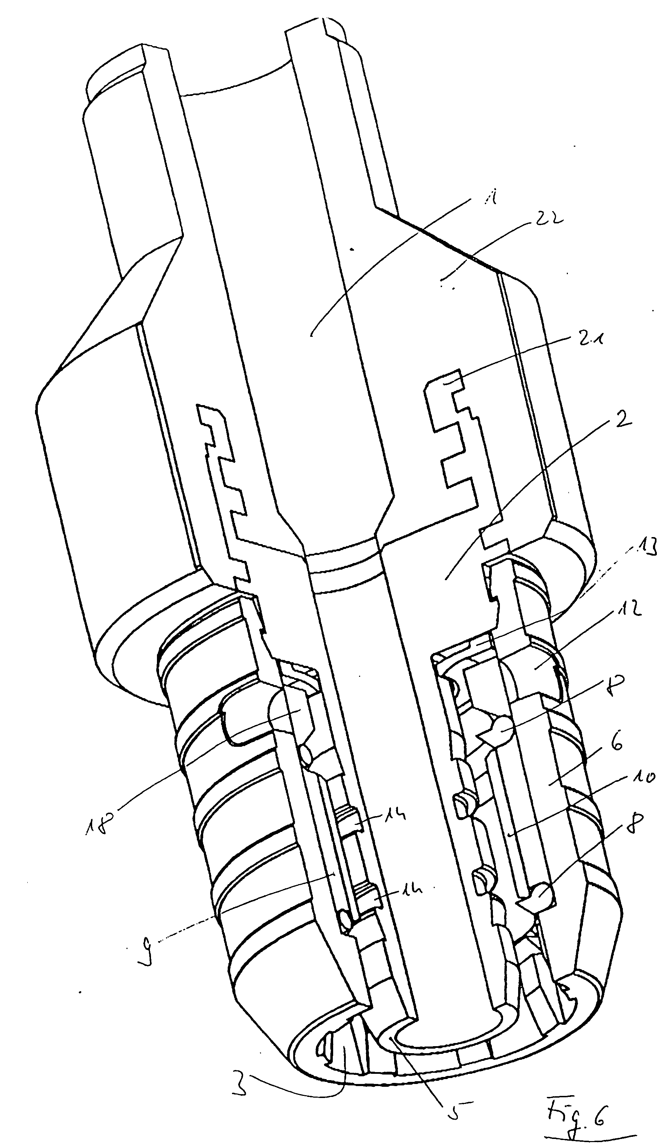

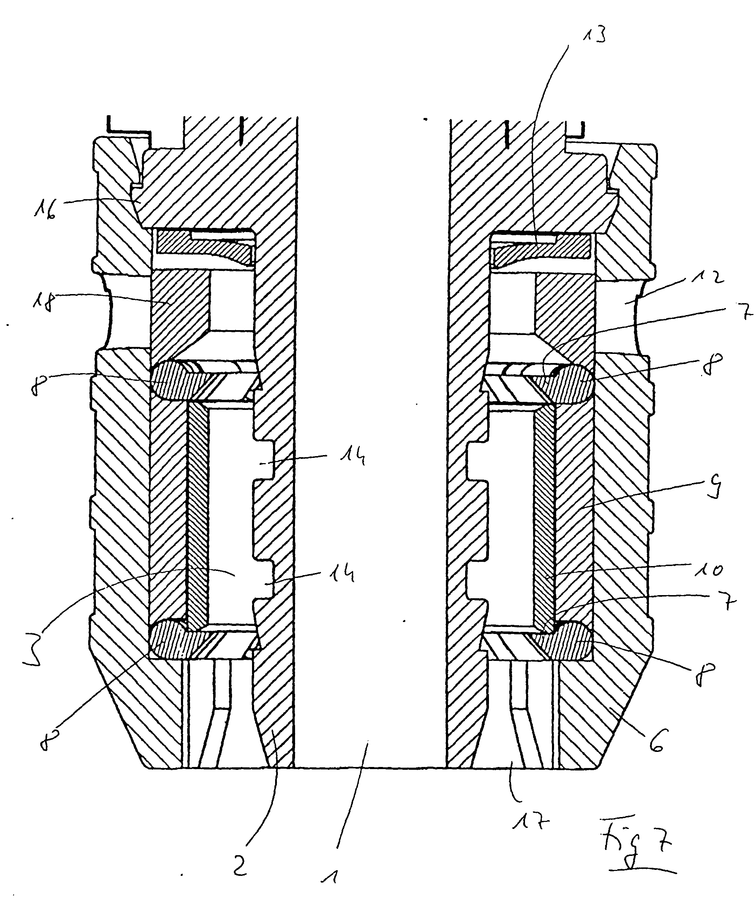

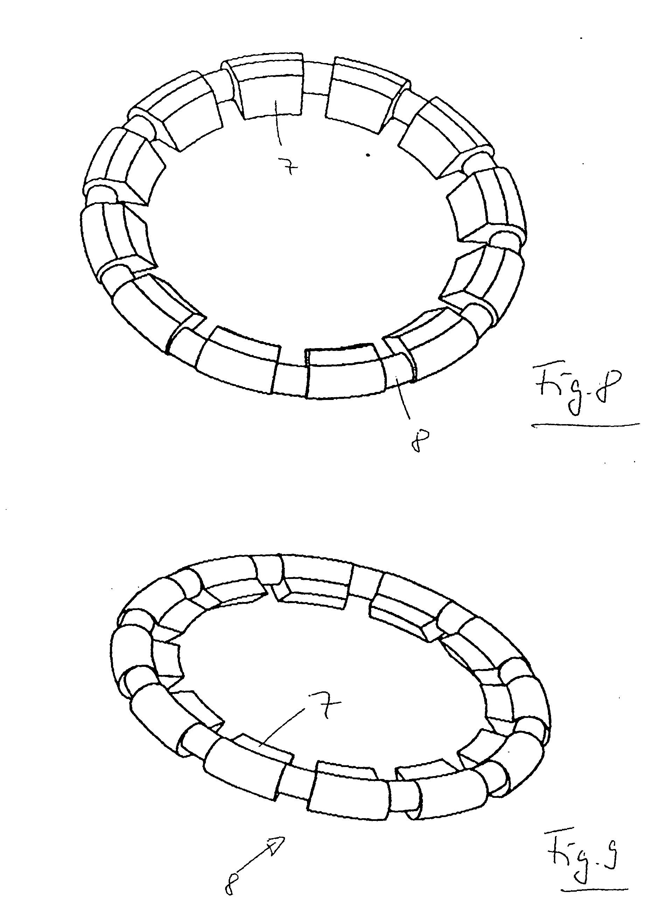

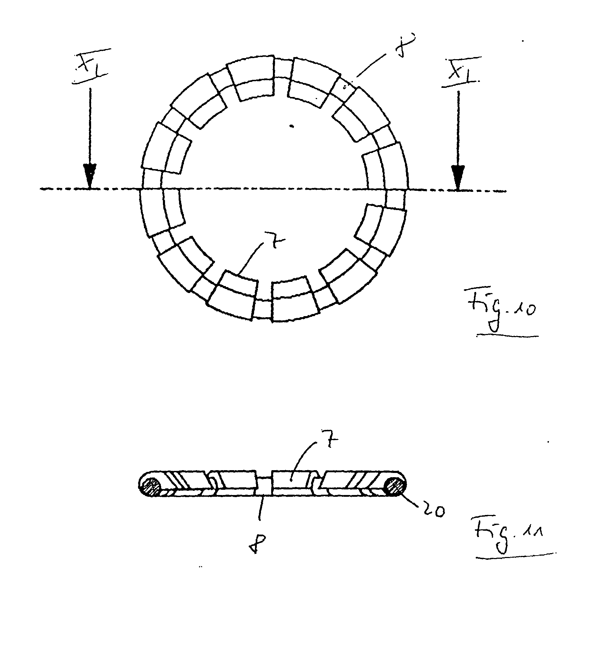

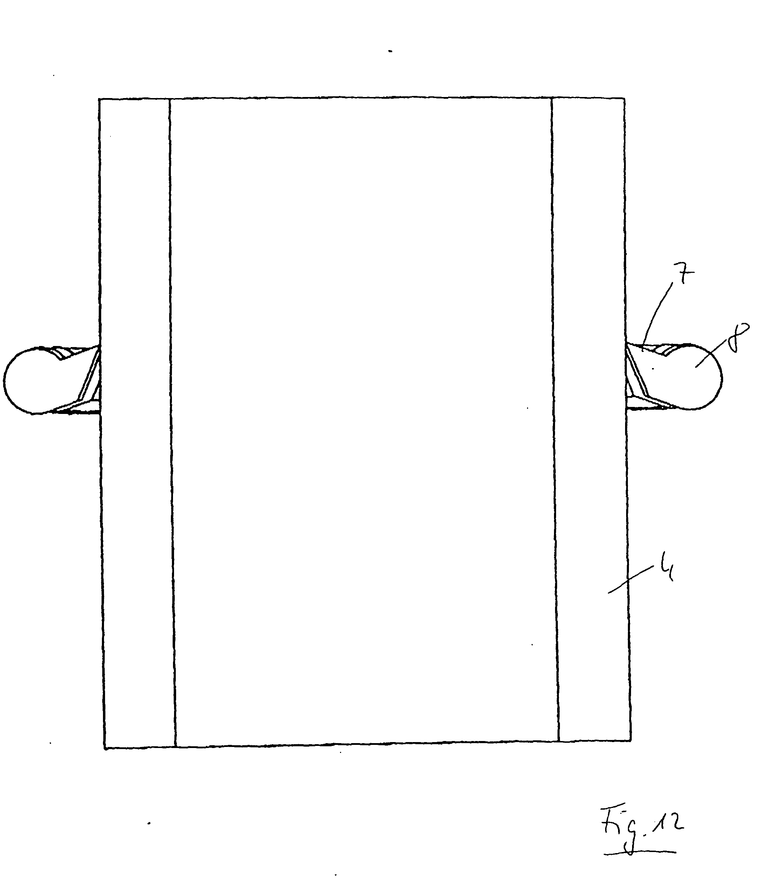

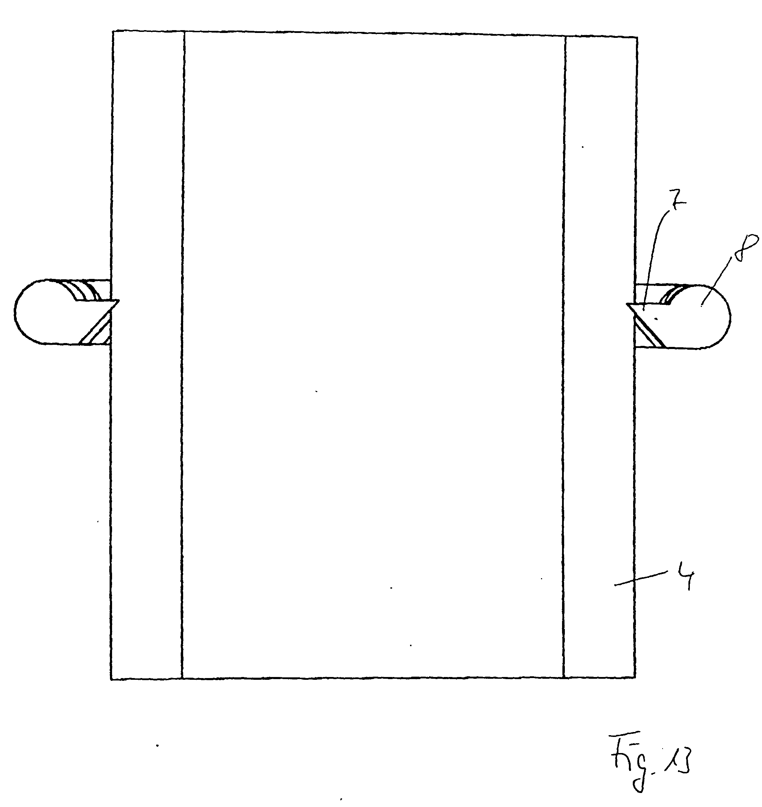

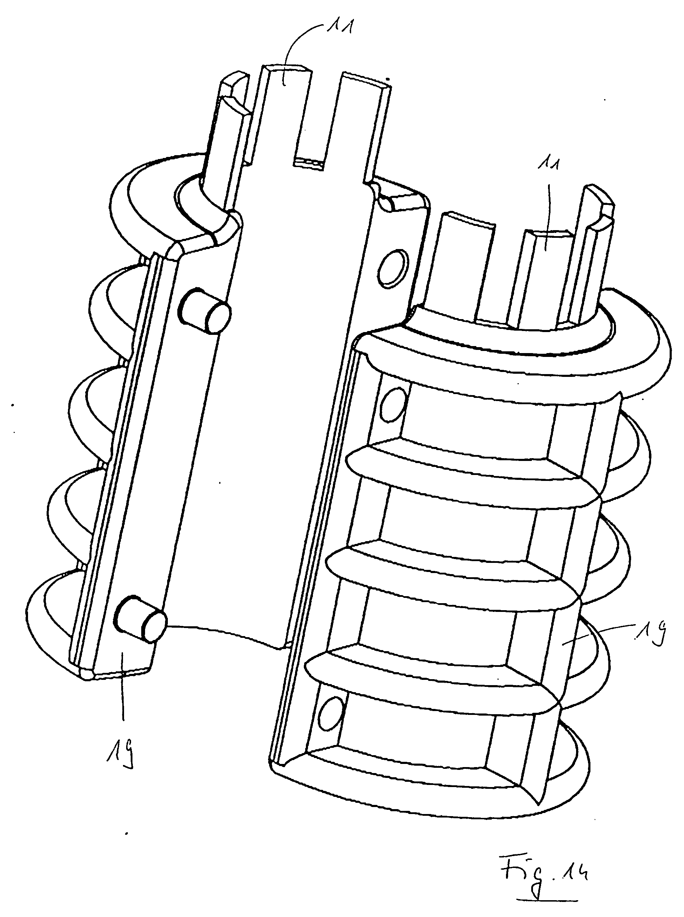

Wie die Abbildungen 1, 5, 6 und 7 im Einzelnen zeigen, sind in den Freiraum 3 zwei Rastringe 8 eingesetzt, welche jeweils mit Krallen 7 versehen sind. Die Rastringe 8 werden nachfolgend in Zusammenhang mit den Fig. 8 bis 11 im Einzelnen beschrieben.

Zur Beabstandung der Rastringe 8 dient eine Distanzhülse 9. Im inneren Freiraum der Distanzhülse 9 ist eine Schiebehülse 10 angeordnet, welche sich in Anlage an die Krallen 7 der Rastringe 8 befindet. Durch die an einem Handstück 19 gelagerten stiftartigen Werkzeuge 11 ist es möglich, die Schiebehülse 10 zu verschieben. Hierdurch werden die Rastringe 8 um ihre ringförmige Mittelachse verdreht, wodurch die Krallen 7 nach oben bewegt werden. Somit ist ein nachträgliches Lösen eines montierten Steckfittings möglich. Wie die Fig. 14 zeigt, ist das Werkzeug, ebenso wie die Handstücke 19, zweiteilig ausgebildet, um auf das Rohr 4 aufgesteckt und nachfolgend verschoben werden zu können.

Die Fig. 8 bis 11 zeigen jeweils die Konstruktion und den Aufbau des Rastrings 8. Dieser weist einen ringförmigen Ringkörper 20 auf, an dem die Krallen 7 einstückig ausgebildet sind. Die Krallen 7 sind jeweils mit einer an ihrem vorderen Ende ausgebildeten Schneide versehen. Im Übrigen sind die Krallen 7, so wie dies insbesondere aus den Darstellungen der Fig. 8 und 9 ersichtlich ist, an einer Seite abgeschrägt.

Wie sich aus der Darstellung der Rastringe ergibt, weisen diese jeweils einen Grundkörper auf, der ringförmig ausgebildet ist und einen Kreisquerschnitt hat. Es liegt somit eine Toroid-Form vor. Die Krallen 7 können sowohl einstückig mit dem Grundkörper des Rastrings 8 ausgebildet sein, es ist auch möglich, diese aus einem anderen Material zu formen. Erfindungsgemäß ist es möglich, den Rastring vollständig aus Kunststoff herzustellen. Er kann jedoch auch vollständig aus Metall gefertigt sein. Als weitere Variante ist es erfindungsgemäß möglich, den Rastring, d.h., den toroid-förmigen Grundkörper aus Kunststoff und die Krallen 7 aus Metall zu fertigen.

Die Fig. 12 und 13 zeigen den Vorgang des Einschiebens eines Rohrs 4 durch einen Rastring 8. Wie sich aus der Fig. 12 ergibt, führt das Einschieben des Rohres zu einer Anlage an die abgeschrägte Seite der Kralle 7. Hierdurch wird der gesamte Rastring 8 in sich verdreht oder gestülpt. Die Krallen 7 bewegen sich somit (gemäß der Abbildung 12, bei welcher das Rohr von unten eingeschoben wird) nach oben. Bei einem nachfolgenden Druckaufbau wird das Rohr geringfügig nach unten gezogen. Dies führt zu einer Verdrehung oder Stülpung des Rastrings 8. Hierdurch werden die Krallen 7 in die Oberfläche des Rohrs 4 eingepresst und verankern dieses. Diese Position ist beispielsweise auch in den Fig. 1, 5 und 7 ersichtlich.

Bei der Verschwenkung der Krallen 7, relativ zu dem toroid-förmigen Grundkörper des Rastrings 8, wird letzterer, abhängig von der Dimensionierung und der Materialauswahl, an den Übergangsbereichen zu den Krallen 7 auf Torsion beansprucht. Hierdurch ergibt sich die Federwirkung der Krallen 7 relativ zu dem Grundkörper des Rastrings (Torsionsrings) 8.

Es versteht sich, dass der erfindungsgemäße Steckfitting symmetrisch aufgebaut sein kann, sodass beidseitig Rohre 4 an den Rohrstutzen 5 befestigt werden können. Es ist auch möglich, den Fitting an einem weiteren Bauelement einstückig zu befestigen, beispielsweise an einer Verzweigung, einem T-Stück, einer Armatur oder Ähnlichem.

Ein derartiges Ausführungsbeispiel zeigt beispielsweise die Fig. 6. Dort ist der Grundkörper 2 an seinem hinteren Endbereich 21 mit einer Schweißmuffe 22 verbunden bzw. in diese eingespritzt bzw. von dieser umspritzt. Aus diesem Grunde weist der hintere Endbereich 21 die dargestellte Kontur auf. Die Schweißmuffe 22 ist aus einem schweißbaren Kunststoff gefertigt.

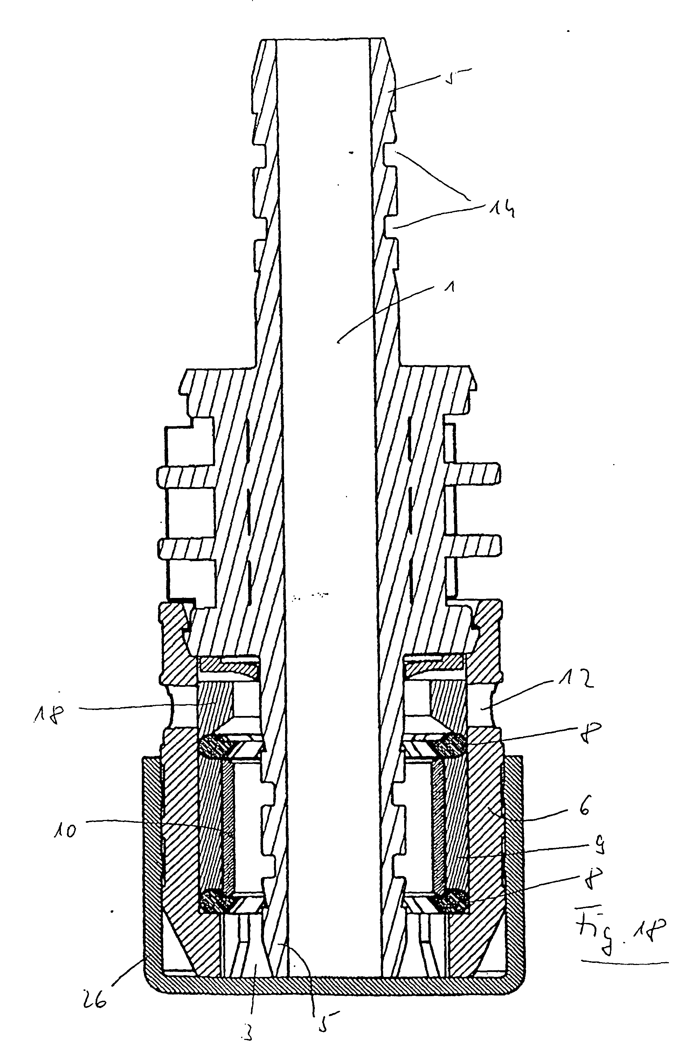

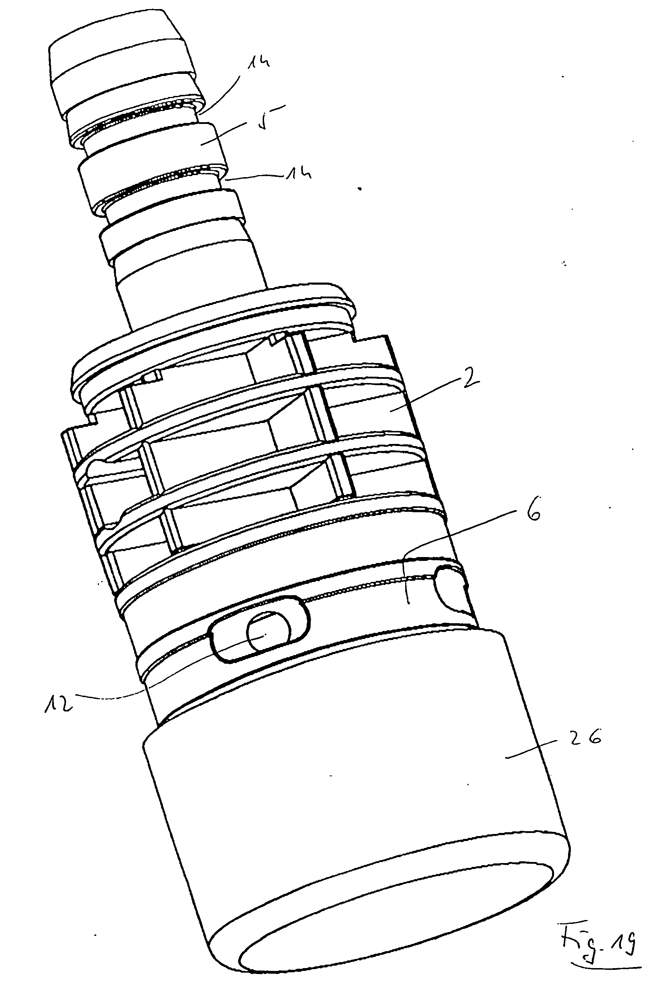

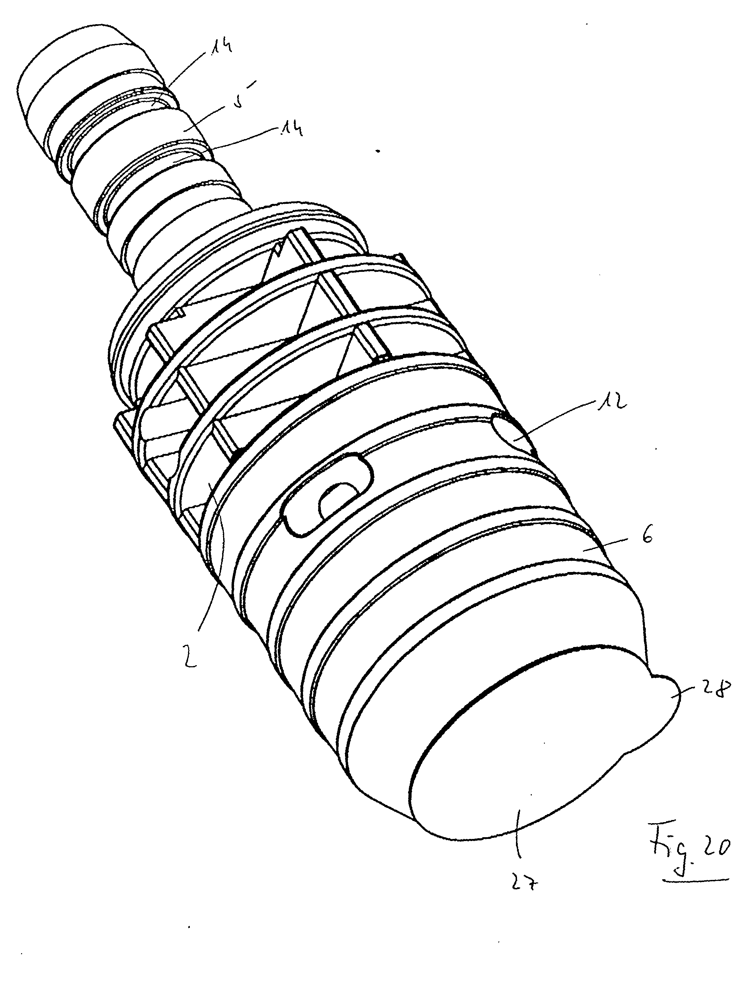

Die Fig. 16 und 17 zeigen eine weitere Ausgestaltungsvariante, bei welcher auf den Rohrstutzen 5 gemäß den vorstehend beschriebenen Ausführungsbeispielen verzichtet wurde. Wie erläutert, ist der Rohrstutzen 5 insbesondere für doppelwandige Rohre oder Mehrschicht-Rohre günstig, die an ihrer Innenwandung mittels Dichtungsringen oder O-Ringen abzudichten sind (auf die Darstellung der O-Ringe wurde in den vorangegangenen Figuren der Übersichtlichkeit halber verzichtet, es sind lediglich die Ringnuten 14 gezeigt). Bei einem einschichtigen Rohr ist somit der Rohrstutzen 5 nicht oder nicht unbedingt erforderlich. Deshalb zeigen die Ausführungsbeispiele der Fig. 16 und 17 Konstruktionen ohne den Rohrstutzen 5. Im Falle der Fig. 16 ist lediglich ein Rastring 8 vorgesehen, während die Fig. 17 zwei Rastringe 8 zeigt. In beiden Fällen ist am hinteren Endbereich der Einsteckausnehmung 3 eine Klickscheibe (Klickring) 13 dargestellt, welche nachfolgend in Zusammenhang mit den Fig. 21 und 22 im Einzelnen noch beschrieben werden wird. Die Fig. 16 und 17 zeigen jeweils zwei O-Ringe 23. Weiterhin ist in diesen Ausführungsbeispielen der Grundkörper 2 rohrartig verlängert, sodass sich eine verkürzte Rasthülse 6 ergibt. Auch wie bei den vorangegangenen Ausführungsbeispielen ist die Rasthülse 6 erforderlich, um die Rastringe 8, die Klickscheibe 13 sowie andere Bauteile zu montieren. Es wäre somit auch bei den vorangegangenen Ausführungsbeispielen möglich, eine verkürzte Rasthülse 6 sowie einen verlängerten Grundkörper 2 zu verwenden, so wie dies in den Fig. 16 und 17 dargestellt ist.

Die Ausführungsbeispiele der Fig. 16 und 17 umfassen, wie erläutert, jeweils zwei O-Ringe 23, welche mittels Distanzringen 24, 25 auf Position gehalten sind.

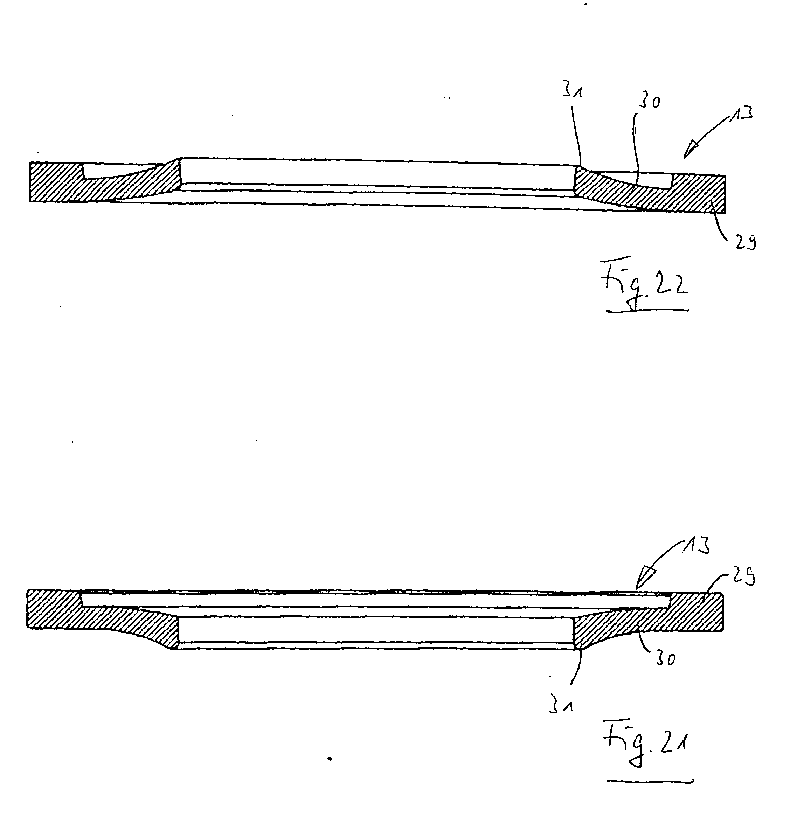

Wie bereits in Zusammenhang mit den vorangehenden Ausführungsbeispielen erläutert, ist es vorteilhaft, wenn die Rasthülse 6 oder ein verlängerter Bereich des Grundkörpers 2 mit zumindest einem Sichtfenster 12 versehen ist. Dieses ist zur Innenseite hin mittels eines transparenten Fensterrings 18 oder eines anderen, geeigneten Bauelements bleibend abgedichtet. Hierdurch wird verhindert, dass Schmutzpartikel oder Ähnliches in den Einsteckraum 3 eindringen. Diese sind nicht nur im Hinblick auf die Hygiene, sondern auch im Hinblick auf die Funktionssicherheit des Steckfittings unerwünscht. Da beispielsweise die O-Ringe eingefettet sind, lassen sich eingedrungene Staub- oder Schmutzpartikel praktisch nicht mehr entfernen, sodass der Steckfitting unbrauchbar würde. Aus diesem Grunde zeigen die Fig. 18 bis 20 weitere Varianten, bei welchen ein "Hygiene-Verschluss" vorgesehen ist. Dieser umfasst bei den Ausführungsbeispielen der Fig. 18 und 19 eine Verschlusskappe 26, welche entweder auf die Rasthülse 6 oder den Grundkörper 2 aufgebracht ist und nach ihrer Entfernung nicht wieder angebracht werden kann (beispielsweise dadurch, dass die Rastverbindung zerstört wird). In Fig. 20 ist ein Ausführungsbeispiel dargestellt, bei welchem eine Verschlussfolie 27 aufgeklebt oder verschweißt ist, die beispielsweise mittels einer Lasche 28 abgerissen werden kann. In jedem Falle ist sichergestellt, dass ein einmal geöffneter Fitting nicht wieder "hygienisch" verschlossen werden kann. Eine Abdichtung der Durchgangsausnehmung 1 ist nicht unbedingt erforderlich, da diese durch das Medium gespült werden kann. Es ist selbstverständlich auch möglich, am anderen Endbereich des Steckfittings einen Verschluss anzubringen.

Die Fig. 21 und 22 zeigen in vergrößerter Darstellung die Klickscheibe, welche präziser als Klickring bezeichnet werden kann. Diese umfasst einen relativ starren Außenring 29, mit welchem einstückig ein weicherer, elastischer Ringkörper 30 verbunden ist. Dessen freies Ende geht in einen verstärkten Innenwulst 31 über. Die Fig. 21 zeigt die Klickscheibe (Klickring) 13 in der Ausgangsposition, so wie sie auch in den vorangegangenen Figuren dargestellt ist. Bei einem Einschieben eines Rohrendes erfolgt eine Druckbelastung auf den Innenwulst 31. Dieser kann sich, ebenso wie der Außenring 29, nur unwesentlich elastisch verformen. Somit bewirkt eine Druckbeaufschlagung auf den Innenwulst 31 eine Verformung des Ringkörpers 30. Dieser springt ab einer bestimmten Belastung von der in Fig. 21 gezeigten Stellung in die in Fig. 22 gezeigte Position, wobei dieses Umklicken oder sprunghafte Umschlagen zu einem Anstoßen des Innenwulst 31 an der stirnseitigen Wandung der Einsteckausnehmung 3 bzw. des Grundkörpers 2 führt. Hierbei ergibt sich ein deutliches Geräusch, welches ganz klar wahrnehmbar ist. Somit erzeugt ein vollständiges Einschieben des Rohrendes in den Steckfitting ein ganz deutliches Klickgeräusch.

Es versteht sich, dass die Konstruktion und Verwendung der Klickscheibe (Klickring) 13 nicht auf die gezeigten Konstruktionen des Steckfittings beschränkt sind, sondern auch bei anderen Ausgestaltungsformen anwendbar sind. Gleiches gilt für den in Zusammenhang mit den Ausführungsbeispielen der Fig. 18 bis 20 beschriebenen "Hygieneverschluss".

Aus der oben stehenden Beschreibung der Klickscheibe (Klickring) ist ersichtlich, dass die Geräuschentwicklung bei der Verformung von der in Fig. 21 gezeigten Position in die Position gemäß Fig. 22 nur einmal auftritt. Der Klickring federt nicht zurück, sodass bei einem Entfernen des Rohrendes und einem nochmaligen Einschieben kein Klickgeräusch mehr hörbar ist. Auch hierdurch wird der Benutzer gewarnt, dass der Steckfitting schon bereits verwendet wurde.

Der erfindungsgemäße Steckfitting kann, wie erläutert, entweder vollständig aus Kunststoff gefertigt sein. Es ist jedoch auch möglich, einzelne Teile aus Kunststoff und andere Teile aus Metall zu fertigen oder den Steckfitting komplett aus Metall herzustellen.

Bei der Fertigung aus Kunststoff können die Teile ganz oder teilweise aus einem transparenten Material bestehen. Dieses kann farblos sein oder farbig hinterlegt sein.

Die Erfindung ist nicht auf die gezeigten Ausführungsbeispiele beschränkt, vielmehr ergeben sich im Rahmen der Erfindung vielfältige Abwandlungs- und Modifikationsmöglichkeiten.

### Bezugszeichenliste

- 1: Durchgangsausnehmung
- 2: Grundkörper
- 3: Einsteckausnehmung
- 4: Rohr
- 5: Rohrstutzen
- 6: Rasthülse
- 7: Kralle
- 8: Rastring
- 9: Distanzhülse
- 10: Schiebehülse
- 11: Werkzeug
- 12: Sichtfenster
- 13: Klick-Scheibe/-Ring
- 14: Ringnut
- 15: Krallringe
- 16: Rastmittel
- 17: Ausnehmung
- 18: Fensterring
- 19: Handstück
- 20: Ringkörper
- 21: hinterer Endbereich
- 22: Schweißmuffe
- 23: O-Ring
- 24: Distanzring
- 25: Distanzring
- 26: Verschlusskappe
- 27: Verschlussfolie
- 28: Lasche
- 29: Außenring
- 30: Ringkörper
- 31: Innenwulst

## Patentansprüche

1. Steckfitting mit einem mit einer Durchgangsausnehmung (1) versehenen Grundkörper (2), mit einer Einsteckausnehmung (3) für einen Endbereich eines Rohrs (4), sowie mit Haltemitteln für das Rohr (4), wobei an dem Grundkörper (2) ein die Einsteckausnehmung (3) bildender Freiraum vorgesehen ist, welcher von einer an dem Grundkörper (2) befestigten Rasthülse (6) umgeben ist, und wobei in dem Freiraum (3) zumindest ein ringförmiger, mit Krallen (7) versehener Rastring (8) angeordnet ist, **dadurch gekennzeichnet, dass** der Rastring (8) einen mit einem im Wesentlichen kreisförmigen Querschnitt versehenen, durch Torsion verformbaren Ringkörper (20) umfasst, an welchem zum Innenraum des Ringkörpers (20) weisende, im Wesentlichen nicht verformbare Krallen (7) angeordnet sind, welche zueinander beabstandet sind, und dass die Kralle (7) mit zumindest einer im Wesentlichen in der Ebene des Ringkörpers (20) angeordneten Schneide versehen ist.

2. Steckfitting nach Anspruch 1, **dadurch gekennzeichnet, dass** der Rastring (8) aus Kunststoff und/oder aus verschiedenen Kunststoffen gefertigt ist.

3. Steckfitting nach einem der Ansprüche 1 oder 2, **dadurch gekennzeichnet, dass** der Rastring (8) aus Metall oder einer Metall-Kunststoff-Kombination gefertigt ist.

4. Steckfitting nach einem der Ansprüche 1 bis 3, **dadurch gekennzeichnet, dass** zwei mittels einer Distanzhülse (9) in dem Freiraum (3) angeordnete, voneinander beabstandete Rastringe (8) vorgesehen sind.

5. Steckfitting nach Anspruch 4, **dadurch gekennzeichnet, dass** radial innerhalb der Distanzhülse (9) eine mit den Krallen (7) der Rastringe (8) in Kontakt befindliche Schiebehülse (10) angeordnet ist.

6. Steckfitting nach Anspruch 5, **dadurch gekennzeichnet, dass** die Rasthülse (6) an ihrem Endbereich einen Innendurchmesser aufweist, welcher zur Einbringung eines auf die Schiebehülse (10) zur Einwirkung kommenden Werkzeugs (11) grösser ist, als der Außendurchmesser des Rohrs (4).

7. Steckfitting nach Anspruch 6, **dadurch gekennzeichnet, dass** die Rasthülse in Segmenten einen größeren Durchmesser zur Einbringung mehrerer am Umfang verteilter stiftartiger Werkzeuge (11) aufweist.

8. Steckfitting nach einem der Ansprüche 1 bis 7, **dadurch gekennzeichnet, dass** an dem Grundkörper (2) ein Rohrstutzen (5) ausgebildet ist, welcher unter Bildung des die Einsteckausnehmung (3) bildenden Freiraums von der Rasthülse (6) umgeben ist.

9. Steckfitting nach Anspruch 8, **dadurch gekennzeichnet, dass** der Rohrstutzen (5) zumindest eine Ringnut (14) für einen Dichtring umfasst.

10. Steckfitting nach einem der Ansprüche 1 bis 9, **dadurch gekennzeichnet, dass** die Rasthülse (6) im Bereich des Freiraums (3) mit zumindest einem Sichtfenster (12) versehen ist, welches mittels eines transparenten Bauelements (18) verschlossen ist.

11. Steckfitting nach einem der Ansprüche 1 bis 9, **dadurch gekennzeichnet, dass** die Rasthülse (6) vollständig aus einem transparenten Material gefertigt ist.

12. Steckfitting nach einem der Ansprüche 1 bis 9, **dadurch gekennzeichnet, dass** die Rasthülse (6) und/oder eine Klickscheibe (13) und/oder die Distanzhülse (9) vollständig aus einem transparenten Material gefertigt sind.

13. Steckfitting nach einem der Ansprüche 1 bis 12, **dadurch gekennzeichnet, dass** am vorderen Endbereich des Freiraums (3) eine ringförmige Klick-Scheibe (13) angeordnet ist.

14. Steckfitting nach Anspruch 13, **dadurch gekennzeichnet, dass** die Klickscheibe (13) und der Fensterring (18) einteilig ausgebildet sind.

15. Steckfitting nach einem der Ansprüche 1 bis 14, **dadurch gekennzeichnet, dass** an dem freien Ende der Rasthülse (6) und/oder der Einsteckausnehmung (3) ein entfernbares Verschlusselement (26, 27) befestigt ist.

16. Steckfitting nach einem der Ansprüche 1 bis 15, **dadurch gekennzeichnet, dass** alle Teile aus Kunststoff gefertigt sind.

## Claims

1. Insertion fitting with a main body (2) provided with a through-recess (1), with an insertion recess (3) for an end region of a pipe (4), and with holding means for the pipe (4), wherein on the main body (2) is provided a free space which forms the insertion recess (3) and which is surrounded by a latch sleeve (6) attached to the main body (2), and wherein in the free space (3) is arranged at least one annular latch ring (8) provided with claws (7), **characterised in that** the latch ring (8) includes a ring body (20) which is provided with a substantially circular cross-section and deformable by torsion and on which are arranged substantially non-deformable claws (7) pointing towards the interior of the ring body (20) which are spaced apart from each other, and **in that** the claw (7) is provided with at least one cutting edge (34) arranged substantially in the plane of the ring body (20).

2. Insertion fitting according to claim 1, **characterised in that** the latch ring (8) is made of plastic and/or different plastics.

3. Insertion fitting according to either of claims 1 or 2, **characterised in that** the latch ring (8) is made of metal or a metal-plastic combination.

4. Insertion fitting according to any of claims 1 to 3, **characterised in that** two spaced-apart latch rings (8) arranged in the free space (3) by means of a distance sleeve (9).

5. Insertion fitting according to claim 4, **characterised in that** radially within the distance sleeve (9) is arranged a sliding sleeve (10) which is in contact with the claws (7) of the latch rings (8).

6. Insertion fitting according to claim 5, **characterised in that** the latch sleeve (6) has in its end region an inside diameter which, for the introduction of a tool (11) which comes to act on the sliding sleeve (10), is larger than the outside diameter of the pipe (4).

7. Insertion fitting according to claim 6, **characterised in that** the latch sleeve in segments has a larger diameter for the introduction of several pin-like tools (11) distributed over the circumference.

8. Insertion fitting according to any of claims 1 to 7, **characterised in that** on the main body (2) is formed a pipe socket (5) which is surrounded by the latch sleeve (6), forming the free space which forms the insertion recess (3).

9. Insertion fitting according to claim 8, **characterised in that** the pipe socket (5) includes at least one annular groove (14) for a sealing ring.

10. Insertion fitting according to any of claims 1 to 9, **characterised in that** the latch sleeve (6) in the region of the free space (3) is provided with at least one inspection window (12) which is closed with a transparent component (18).

11. Insertion fitting according to any of claims 1 to 9, **characterised in that** the latch sleeve (6) is completely made from a transparent material.

12. Insertion fitting according to any of claims 1 to 9, **characterised in that** the latch sleeve (6) and/or a click disc (13) and/or the distance sleeve (9) are completely made from a transparent material.

13. Insertion fitting according to any of claims 1 to 12, **characterised in that** on the front end region of the free space (3) is arranged an annular click disc (13).

14. Insertion fitting according to claim 13, **characterised in that** the click disc (13) and the window ring (18) are constructed in one piece.

15. Insertion fitting according to any of claims 1 to 14, **characterised in that** attached to the free end of the latch sleeve (6) and/or the insertion recess (3) is a removable closure element (26, 27).

16. Insertion fitting according to any of claims 1 to 15, **characterised in that** all parts are made of plastic.

## Revendications

1. Raccord à emboîtement comprenant un corps de base (2) pourvu d'un évidement de passage (1), un évidement d'emboîtement (3) pour une zone d'extrémité d'un tuyau (4), et des moyens de retenue pour le tuyau (4), un espace libre formant l'évidement d'emboîtement (3) étant prévu sur le corps de base (2), lequel espace est entouré d'une douille d'arrêt (6) fixée sur le corps de base (2), et au moins une bague d'arrêt (8) en forme de bague et pourvue de griffes (7) étant disposée dans l'espace libre (3), **caractérisé en ce que** la bague d'arrêt (8) comprend un corps de bague (20) pourvu d'une section sensiblement circulaire et déformable par torsion, corps sur lequel sont disposées des griffes (7) dirigées vers l'espace intérieur du corps de bague (20) et dans l'ensemble non déformables, lesquelles sont espacées les unes des autres, et **en ce que** la griffe (7) est pourvue d'au moins une lame disposée sensiblement dans le plan du corps de bague (20).

2. Raccord à emboîtement selon la revendication 1, **caractérisé en ce que** la bague d'arrêt (8) est fabriquée à base de matière synthétique et/ou de différentes matières synthétiques.

3. Raccord à emboîtement selon l'une quelconque des revendications 1 ou 2, **caractérisé en ce que** la bague d'arrêt (8) est fabriquée à base de métal ou d'une combinaison de métal-matière synthétique.

4. Raccord à emboîtement selon l'une quelconque des revendications 1 à 3, **caractérisé en ce qu'**il est prévu deux bagues d'arrêt (8) disposées au moyen d'une douille d'écartement (9) dans l'espace libre (3) et espacées l'une de l'autre.

5. Raccord à emboîtement selon la revendication 4, **caractérisé en ce qu'**une douille coulissante (10) se trouvant en contact avec les griffes (7) des bagues d'arrêt (8) est disposée radialement à l'intérieur de la douille d'écartement (9).

6. Raccord à emboîtement selon la revendication 5, **caractérisé en ce que** la douille d'arrêt (6) présente sur sa zone d'extrémité un diamètre intérieur qui, pour l'introduction d'un outil (11) venant pour agir sur la douille coulissante (10), est supérieur au diamètre extérieur du tuyau (4).

7. Raccord à emboîtement selon la revendication 6, **caractérisé en ce que** la douille d'arrêt présente dans des segments un diamètre supérieur pour l'introduction de plusieurs outils (11) en forme de broche et répartis sur la périphérie.

8. Raccord à emboîtement selon l'une quelconque des revendications 1 à 7, **caractérisé en ce que** sur le corps de base (2) est réalisée une tubulure (5) qui est entourée par la douille d'arrêt (6) en formant l'espace libre formant l'évidement d'emboîtement (3).

9. Raccord à emboîtement selon la revendication 8, **caractérisé en ce que** la tubulure (5) comprend au moins une rainure annulaire (14) pour une bague d'étanchéité.

10. Raccord à emboîtement selon l'une quelconque des revendications 1 à 9, **caractérisé en ce que** la douille d'arrêt (6) est pourvue dans la zone de l'espace libre (3) d'au moins une fenêtre d'inspection (12) qui est fermée au moyen d'un composant (18) transparent.

11. Raccord à emboîtement selon l'une quelconque des revendications 1 à 9, **caractérisé en ce que** la douille d'arrêt (6) est fabriquée complètement dans un matériau transparent.

12. Raccord à emboîtement selon l'une quelconque des revendications 1 à 9, **caractérisé en ce que** la douille d'arrêt (6) et/ou une rondelle à déclic (13) et/ou la douille d'écartement (9) sont fabriquées complètement dans un matériau transparent.

13. Raccord à emboîtement selon l'une quelconque des revendications 1 à 12, **caractérisé en ce qu'**un disque à déclic (13) de forme annulaire est disposé sur la zone d'extrémité avant de l'espace libre (3).

14. Raccord à emboîtement selon la revendication 13, **caractérisé en ce que** la rondelle à déclic (13) et la bague de fenêtre (18) sont conçues d'une seule pièce.

15. Raccord à emboîtement selon l'une quelconque des revendications 1 à 14, **caractérisé en ce qu'**un élément de fermeture (26, 27) pouvant être enlevé est fixé sur l'extrémité libre de la douille d'arrêt (6) et/ou l'évidement d'emboîtement (3).

16. Raccord à emboîtement selon l'une quelconque des revendications 1 à 15, **caractérisé en ce que** toutes les pièces sont fabriquées à base de matière synthétique.
